# EUROPEAN PATENT APPLICATION

(11) **EP 4 485 643 A1**
(43) Date of publication of application: **01.01.2025**
(21) Application number: 23182289.1
(22) Date of filing: 29.06.2023
(51) Int. Cl.: H01M 50/178, B67C 3/28, H01M 50/183, H01M 50/609

(54) **VALVE UNIT AND METHOD FOR ELECTROLYTE FILLING OF BATTERY CELL POUCH HOUSING**

(71) Applicant: Cellforce Group GmbH, 72072 Tübingen (DE)
(72) Inventor: GRÄF, Jürgen, 72072 Tübingen (DE)
(74) Representative: Müller Schupfner & Partner Patent- und Rechtsanwaltspartnerschaft mbB (Muc)

(57) **Abstract**

The invention relates to a valve unit (10), which is configured for electrolyte injection, comprising a fluid port (11) for connecting an electrolyte source and comprising a joining portion (12), wherein the joining portion (12) comprises at least two surfaces (21, 22) which are configured for connecting at least one layer of a battery cell housing (101), and comprising at least one fluid channel (13), wherein the at least one fluid channel (13) is protruding through the fluid port (11) and the joining portion (12), characterized in that the fluid channel (13) is repeatedly openable and closeable and the fluid port (11) comprises a locking portion (14) at its outer surface. Furthermore, the invention relates to a manufacturing state battery cell (110) and to a method (50).

## Description

The present disclosure relates to a valve unit which is configured for electrolyte injection especially during manufacturing of battery cells. The valve unit comprises a fluid port for connecting an electrolyte source and a joining portion, wherein the joining portion comprises at least two surfaces which are configured for connecting at least one layer of a battery cell housing. Moreover, the present disclosure relates to a battery cell housing during a manufacturing of a battery cell and a method for manufacturing battery cells.

Lithium-ion batteries are used in different technical fields and provide stored energy to electrical components like electrical motors, displays etc. Especially in electric vehicles and in hybrid electric vehicles such lithium-ion batteries are supplying the vehicle components and the drivetrain with electrical energy. There is constant development of the lithium-ion batteries towards higher capacities. The capacity of the battery may be increased by increasing the surface area of the electrodes. This is achieved by more complex surface structures.

During the manufacturing of the lithium-ion batteries battery cell housings are provided and equipped with the usual battery components e.g. anode structure, cathode structure and separator structure. The battery cell housings are then filled with an electrolyte solution which is absorbed by the battery components. This manufacturing step requires multiple refills of the electrolyte solution and may last hours or days depending on the battery cell characteristics. The battery cell housings are usually open to the environment during this waiting time for the full absorption of the electrolyte solution.

Thus, for a mass production of such battery cells large storage or manufacturing areas are required which fulfil high standards in order to prevent any contamination, especially of pouch type battery cells. Such areas are complex, expensive to build and maintain and do increase the manufacturing costs of battery cells.

An objective of the present disclosure is to provide a valve unit and a method for manufacturing a battery cell which enable filling of battery cell housings over an extended period of time without the risk of contamination or battery housing degradation. This object is achieved by the subject-matter of the independent claims. Further developments of the subject-matter of the independent claims are provided in the sub-claims.

According to one aspect of the present disclosure a valve unit is provided. The valve unit is configured for electrolyte injection especially during manufacturing of battery cells.

The inventive valve unit comprises a fluid port for connecting an electrolyte source and a joining portion. The joining portion comprises at least two surfaces which are configured for connecting at least one layer of a battery cell housing. At least one fluid channel is provided which is protruding through the fluid port and the joining portion.

This fluid channel is configured for injection of fluids through the fluid port such that the fluid channel at the fluid port acts as fluid inlet and the fluid channel at the joining portion acts as a fluid outlet.

The fluid channel of the inventive valve unit is repeatedly openable and closeable and the fluid port comprises a locking portion at its outer surface.

Via the locking portion a hose or injection adapter may interconnect with the fluid port, especially with the outer surface of the fluid port, in order to provide electrolyte solution infill or in order to generate a vacuum at the fluid channel. Thus, the fluid channel may also act as a fluid outlet if a vacuum or low pressure is generated at the entrance of the fluid port side of the fluid channel.

At least one valve unit may be inserted or joined into a battery cell housing during the manufacturing process. Due to the repeatedly openable and closeable fluid channel during the manufacturing of the battery cells the battery cell housings may be opened for filling of electrolyte solution and afterwards the fluid channels may be closed preventing any contamination of the inside cavities and of the battery components inside the battery housing. Thus, the storage area or manufacturing area where the battery cells are stored during the absorption time of the electrolyte is no longer required to fulfil high standards. Thus, the manufacturing sites may be less expensive to build and maintain such that the manufacturing effort and manufacturing costs of battery cells can be reduced.

In accordance with an embodiment, the fluid port comprises a rotation-symmetric shape around a flow direction through the fluid channel, wherein the locking portion is formed as a bulge or as a groove which is arranged at least partially at the outer surface of the fluid port. The flow direction through the fluid channel is defined as the axis for the rotation symmetry. Preferably, the fluid channel is formed as a straight and cylindrically shaped opening or pipe which protrudes through the entire valve unit. Due to its rotation-symmetric shape the valve unit may be manufactured technically simple.

The locking portion can act as a holding portion for a tool which may encompass or grab the bulge or groove in order to maintain a save connection for infill of electrolyte solution or for vacuum generation.

The valve unit may preferably be integrated into a sealing portion of a battery cell housing. The sealing portion of the battery cell housing comprises two sides or layers of the battery cell housing which are combined together along a line or area. These layers or sides of the battery cell housing may encompass the surfaces of the joining portion of the at least one valve unit. Thus, the joining portion spreads or spaces the two sides of the battery cell housing without interrupting the connection and without providing any holes or perforations into the battery cell housing cavities.

Based on a further embodiment, the fluid port, the fluid channel and the joining portion of the valve unit are integrally formed as a one-piece component. Thus, the entire valve unit may be manufactured via injection molding in a simple and cheap manner.

The at least two surface of the joining portion may be integrated into a sealing portion of a battery cell housing especially efficient if the surfaces of the joining portion comprise a curved shape. Due to the curved shape of the surfaces the risk of mechanical damage of the sealing portion of the battery cell housing during the manufacturing procedure may be reduced.

According to a further embodiment, the at least two surface of the joining portion are formed smoothly or comprise cross ribs. Thus, by providing smooth surfaces, the connection area between the joining portion and the sealing portion of the battery cell housing may be maximized. The incorporation of cross ribs may increase the mechanical strength of the connection between the joining portion and the sealing portion of the battery cell housing.

In a further embodiment, the joining portion comprise two surfaces and the two surface comprise cross sections, especially orthogonally to the flow direction, with a bell curve shape with asymptotically shaped tails which are connected with each other at their ends. By providing this measure, the sealing portion of the battery cell housing may be structurally affected in a least possible manner.

Moreover, a further embodiment of the valve unit is provided, wherein the valve unit comprises a valve cap or a valve plug or a melting portion or a bending portion, wherein the fluid channel is repeatedly openable and closeable via the valve cap or the valve plug or the melting portion or the bending portion. Thus, the valve unit comprises a plurality of possible closing and opening mechanism which may be utilized in order to prevent any contamination of the inside of the battery cell housing.

According to a further embodiment, the valve cap or the valve plug comprise at least one axially acting and/or radially acting sealing, wherein the at least one sealing is formed integrally with the valve cap or the valve plug.

Thus, the fluid channel of the valve unit of a valve unit assembly which comprises the valve unit and a valve cap or a valve plug may be closed in a sealed manner simultaneously preventing any leakage of the electrolyte solution. Hence, in a further embodiment, the valve cap or the valve plug is configured to be attached at the fluid port via plugging or screwing in order to prevent fluid leakage.

In accordance with a further embodiment of the valve unit or the valve unit assembly, the valve cap or the valve plug is pluggable inside the fluid channel of the fluid port or is screwable into the fluid channel of the fluid port or is screwable onto an outer circumference of the fluid port or is pluggable onto the outer circumference of the fluid port. Thus, radial acting sealing or axially acting sealing may be utilized in order to maintain a fluid tight joining of the valve unit and the valve plug or cap.

Based on a further embodiment, the valve cap or the valve plug comprises at least one tool attachment, wherein the tool attachment is arranged at at least one side or on top of the valve cap or the valve plug. Thus, the valve cap or the valve plug may be attached or removed with the help of a manual tool or with the help of an automatic tool. This measure enables automation of the infill of electrolyte simultaneously to a plurality of battery cell housings. Moreover, the valve cap or the valve plug may be removed more easily without the need of direct physical contact and with cleaned tools thus reducing the risk of contamination.

According to a further aspect of the present disclosure a battery cell during a manufacturing, in other words a manufacturing state battery cell, is disclosed. The manufacturing state battery cell comprises a housing bag with at least one cavity which incorporates battery cell components. The housing bag may be formed from one layer or multiple layers. For example aluminum may be utilized as one layer of the housing bag. The housing bag may be formed as a pouch type housing for example.

The battery cell components may comprise an anode, a cathode and a separator which are winded or folded in order to increase the active areas of these components. Furthermore, the manufacturing state battery cell housing comprises at least one inventive valve unit, wherein at least one fluid channel of the at least one valve unit is forming a fluid connection with the at least one cavity through a housing sealing and the at least one valve unit is connected with the housing sealing via the joining portion.

The housing sealing may form at least one edge of the housing bag of the manufacturing state battery cell. At the housing sealing all layers of the battery housing bag or the battery cell housing are joined together in order to close the inside of the housing in direction of this edge.

With the use of the at least one valve unit a controlled inlet and outlet to the cavity of the manufacturing state battery cell may be formed with reduced risk of contamination. Moreover, the cavity of the manufacturing state battery cell may be provided with vacuum technically easy e.g. via an attached hose to the valve unit, such that the storage area of the manufacturing state battery cell may remain at normal atmosphere.

In accordance with an embodiment, the manufacturing state battery cell comprises a cell component cavity and at least one buffer cavity for temporally incorporating an electrolyte solution during a manufacturing process of a battery cell. The at least one fluid channel of the at least one valve unit protrudes into the at least one buffer cavity. Thus, the amount of electrolyte solution which is injected into the manufacturing state battery cell housing may be increased such that the amount of refills of the electrolyte may be reduced. Furthermore, since the buffer cavity is spaced from the cell component cavity, the buffer cavity with the at least one valve unit at the edge housing sealing may be removed easily without affecting the final battery cell configuration.

Based on a further embodiment, the at least two surface areas of the joining portion are connectable to the battery cell housing by welding or soldering or gluing or melting. Thus, the at least one valve unit may be incorporated into the battery cell housing or the housing bag more flexible based in different joining methods.

Depending on the layer architecture of the battery cell housing bag the at least two surfaces of the joining portion can be glued or melted together with one layer which might for example be formed as a plastic e.g. PP, PVC, HDPE, nylon. Preferably the entire valve unit or solely the joining portion may consist of the same material as the layer or material of the layer to be joined. Thus, the joining procedure may be technically simplified.

In a further embodiment of the manufacturing state battery cell the at least two surface areas of the joining portion of the at least one valve unit are connected to a sealing area of a top edge housing sealing and/or to a sealing area of a cut-off corner of the housing sealing. Thus, based on a technically simple embodiment, the at least one valve unit may extend vertically from the top edge housing sealing.

In an alternative or additional embodiment the valve unit extends in an inclined manner from the sealing area of a cut-off corner. Preferably, such inclined valve unit remains below or equal to a height of the top edge housing sealing. Thus, the manufacturing state battery cell may be formed with a reduced height enabling a reduction in required manufacturing space.

In accordance with a further aspect of the present disclosure a method to manufacture a battery cell is provided. A battery cell housing bag is formed or provided which comprises one first cavity and one second cavity, wherein battery cell components are positioned inside the first cavity. The first cavity may also be defined as component cavity. The component cavity will later form the final cavity of the final battery cell.

In a further step the battery cell housing bag is sealed, wherein at least one valve unit is connected to a sealing of the battery cell housing bag and comprises a fluid channel which protrudes into the second cavity. Additionally or alternatively, the fluid channel may protrude into the first cavity and/or into the second cavity. The second cavity may also be defined as a buffer cavity for temporary storing electrolyte solution while the electrolyte solution is absorbed by the battery cell components inside the first cavity.

In a further optional step, a vacuum is applied to the first cavity and the second cavity and an electrolyte is introduced into at least the second cavity via the at least one valve unit.

The electrolyte solution is injected or introduced at least once into the second cavity. Based on the battery cell components and the absorption process it might be necessary to refill the electrolyte solution in order to maintain the absorption process until the entire battery cell component stack is soaked with electrolyte solution.

In the following absorption step, the electrolyte solution is at least partially soaked by the battery cell components.

Then, after complete soaking of the electrolyte by the battery cell components a second sealing is performed between the first and the second cavity and the second cavity is removed from the first cavity forming a battery cell. The second sealing is cutting any fluid connection between the first cavity and the second cavity.

Depending on the application with the second sealing the fluid connection to the at least one valve unit may also be closed. Thus, after removing the second cavity also the valve unit may be removed from the battery cell.

In a subsequent method step, the at least one valve unit may be recovered via partial heating or grinding in order to remove the parts of the sealing and/or battery cell housing bag layers from the joining portion.

Prior to the recovery step and/or prior to the separation of the second cavity along the second sealing from the first cavity the second cavity may be emptied via vacuum or via gravity through the at least one valve unit. This enables controlled removal of any remaining electrolyte solution and prevents any damage to the battery cell housing through corrosion.

Based on an embodiment, the electrolyte is filled at least twice through the valve unit into the second cavity, wherein the valve cap or the valve plug is removed for filling of the electrolyte and wherein the valve cap or the valve plug is attached to the fluid port after filling of the electrolyte. Thus, the absorption process can be maintained throughout a long period of time with minimum risk of contamination of the inside of the battery cell housing or of the outside of the battery cell housing.

Based on the application and the requirements, during the manufacturing of the battery cells, all valve units may be connected via tools and/or houses and may remain connected until the absorption process is completed.

In a further embodiment, after complete soaking of the electrolyte by the battery cell components any remaining electrolyte in the second cavity is removed via the at least one valve unit after performing the second sealing. Thus, the remaining electrolyte solution can be recovered and a more efficient manufacturing of the battery cells can be provided due to reduced waste occurrence.

The present disclosure will be explained in more detail below on the basis of schematic embodiments shown in the accompanying drawings:
- Fig. 1A-C: show an exemplary valve unit illustrated from different perspectives according to an embodiment of the invention,
- Fig. 2: shows an exemplary valve plug according to an embodiment of the invention,
- Fig. 3A-C: shows different cross sections of an exemplary manufacturing state battery cell according to an embodiment of the invention,
- Fig. 4: shows a cross section of an exemplary manufacturing state battery cell according to a further embodiment of the invention, and
- Fig. 5: shows an exemplary diagram illustrating a method for manufacturing a battery cell in accordance with an embodiment of the invention.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

Unless the context requires otherwise, throughout the present specification and claims, the word "comprise" and variations thereof, such as, "comprises" and "comprising" are to be construed in an open, inclusive sense, that is, as "including, but not limited to".

In the present description, any concentration range, percentage range, ratio range, or integer range is to be understood to include the value of any integer within the recited range and, when appropriate, fractions thereof (such as one tenth and one hundredth of an integer), unless otherwise indicated. As used herein, the terms "about" and "approximately" mean ± 20%, ± 10%, ± 5% or ± 1% of the indicated range, value, or structure, unless otherwise indicated. It should be understood that the terms "a" and "an" as used herein refer to "one or more" of the enumerated components. The use of the alternative (e.g., "or") should be understood to mean either one, both, or any combination thereof of the alternatives.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless defined otherwise, all technical and scientific terms used herein have the same meaning as is commonly understood by one of skill in the art to which this disclosure belongs. As used in the specification and claims, the singular form "a", "an" and "the" includes plural references unless the context clearly dictates otherwise.

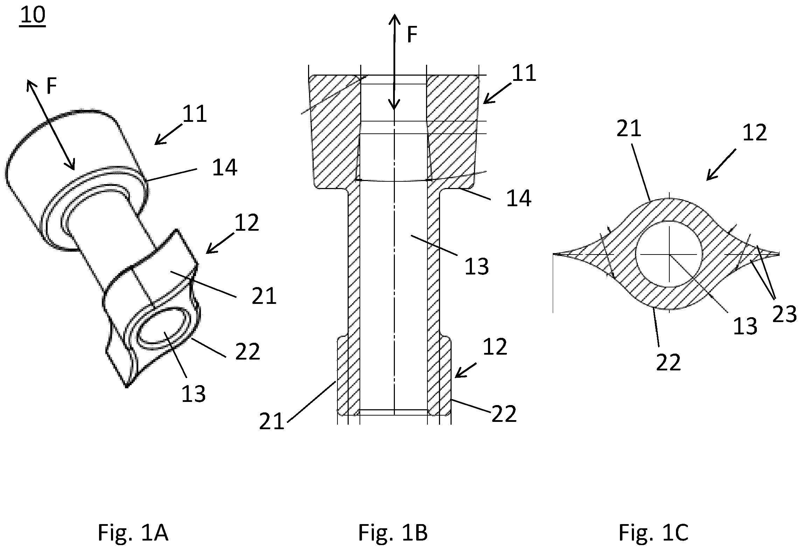

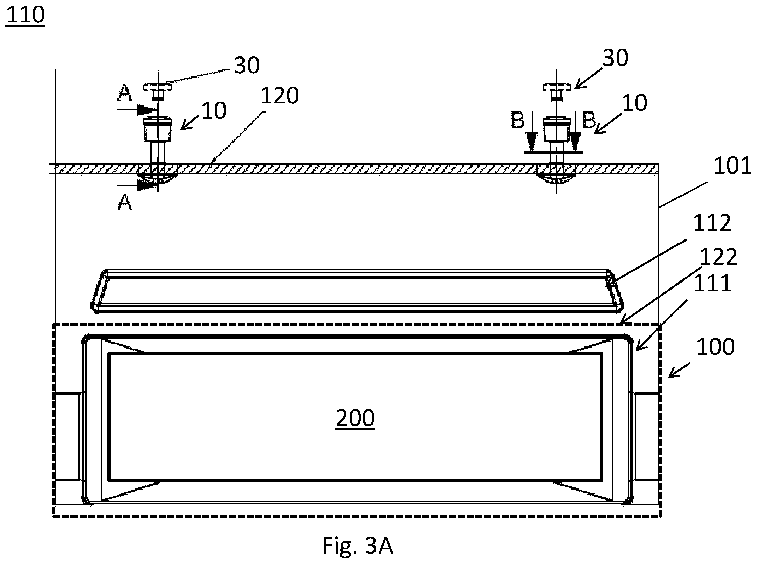

In Fig. 1A, Fig. 1B and Fig. 1C an exemplary valve 10 unit according to an embodiment of the invention is illustrated from different perspectives. The valve unit 10 is configured for electrolyte injection especially during manufacturing of battery cells 100. An exemplary battery cell 100 is for example visible in Fig. 3A.

The inventive valve unit 10 comprises a fluid port 11 for connecting an electrolyte source and a joining portion 12. The joining portion 12 comprises at least two surfaces 21, 22 which are configured for connecting at least one layer of a battery cell housing 101. At least one fluid channel 13 is provided which is protruding through the fluid port 11 and the joining portion 12. In Fig. 1B a cross section of the valve unit 10 is shown which illustrates the cylindrical shape of the fluid channel 13.

This fluid channel 13 is configured for injection of fluids through the fluid port 11 such that the fluid channel 13 at the fluid port 11 acts as fluid inlet and the fluid channel 13 at the joining portion 12 acts as a fluid outlet. The fluid channel of the inventive valve unit is repeatedly openable and closeable and the fluid port 11 comprises a locking portion 14 at its outer surface.

Via the locking portion 14 a hose or injection adapter may interconnect with the fluid port 11, especially with the outer surface of the fluid port 11, in order to provide electrolyte solution infill or in order to generate a vacuum at the fluid channel 13. Thus, the fluid channel 13 may also act as a fluid outlet if a vacuum or low pressure is generated at the entrance of the fluid port 11 side of the fluid channel 13.

At least one valve unit 10 may be inserted or joined into a battery cell housing 101 during the manufacturing process. Such manufacturing stage battery cell 110 is shown in Fig. 3A. Due to the repeatedly openable and closeable fluid channel during the manufacturing of the battery cells 100 the battery cell housings 101 may be opened for filling of electrolyte solution and afterwards the fluid channels 13 may be closed preventing any contamination of the inside cavities 111, 112 and of the battery cell components 200 inside the battery cell housing 101.

As shown in Fig. 1C, the joining portion 12 has two surfaces 21, 22 with a smooth connection area. The two surfaces 21, 22 comprise cross sections, especially orthogonally to a flow direction F, with a bell curve shape with asymptotically shaped tails 23 which are connected with each other at their ends.

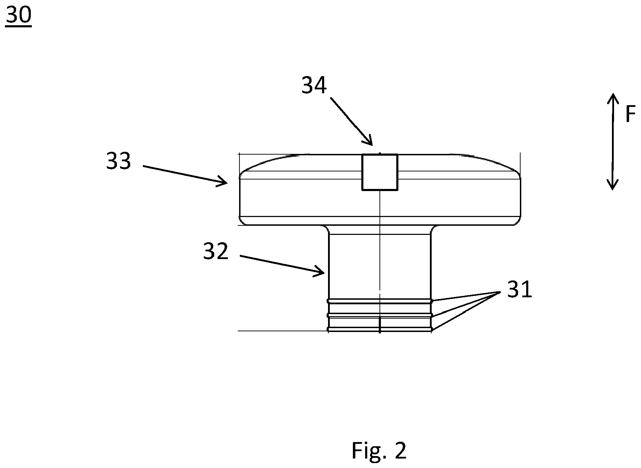

Fig. 2 shows an exemplary valve plug 30 according to an embodiment of the invention. The valve plug 30 or a valve cap (not shown) is forming together with the valve unit 10 a valve assembly. Thus, the fluid channel 13 of the valve unit 10 is repeatedly openable and closeable via the valve plug 30 based on the shown example.

The valve plug 30 comprises three radially acting sealings 31. These sealings are formed integrally with the valve plug 30. Especially, the sealings 31 are formed as bulges or circumferential ribs which are spaced from each other in flow direction F. The valve plug 30 is configured to be attached at the fluid port 13 via plugging in order to prevent fluid leakage. Thus, a shaft 32 of the valve plug 30 fits and extends into the fluid channel 13. A top part 33 of the valve plug 30 acts as a stop or limit for the valve plug 30.

Moreover, the valve plug 30 comprises at least one tool attachment 34. The tool attachment 34 is arranged at the top part 33 of the valve plug 30. Thus, the valve cap or the valve plug may be attached or removed with the help of a manual tool or with the help of an automatic tool.

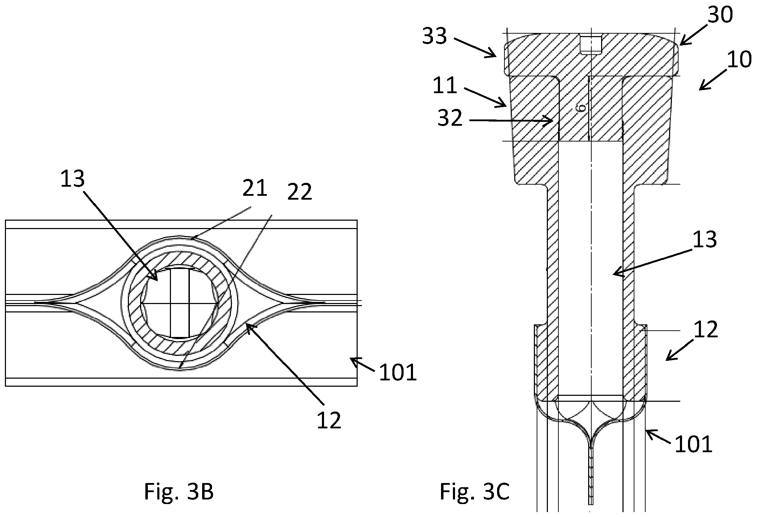

Fig. 3A, Fig. 3B and Fig. 3C show different cross sections of an exemplary manufacturing state battery cell 110 according to an embodiment of the invention. The manufacturing state battery cell 110 is a temporary shape or arrangement which is maintained during the absorption duration of the electrolyte by the battery cell components 200. In the shown example, the manufacturing state battery cell 110 comprises a housing bag 101 with a cell component cavity 111 or the first cavity 111 and at one buffer cavity 112 or a second cavity 112 for temporally incorporating an electrolyte solution during a manufacturing process of a battery cell 100. The final battery cell 100 is schematically shown as part of the manufacturing state battery cell 110. In the shown example two valve units 10 are integrated into a top sealing 120 of the battery cell housing 101. The at least one fluid channel 13 of the valve units 10 protrudes at least into the buffer cavity 112.

The cell housing bag 101 may be formed from one layer or multiple layers. For example aluminum may be utilized as one layer of the housing bag 101. The housing bag 101 is formed as a pouch type housing.

The battery cell components 200 may comprise an anode, a cathode and a separator which are winded or folded in order to increase the active areas of these components. The fluid channels 13 of the valve units 10 are forming a fluid connection with the at least one cavity 111, 112 through the housing sealing 120 and the at least one valve unit 10 is connected with the housing sealing 120 via the joining portion 12.

The housing sealing 120 is formed at the top edge of the housing bag 101 of the manufacturing state battery cell 110. At the housing sealing 120 all layers of the battery housing bag 101 or the manufacturing state battery cell housing 110 are joined together in order to close the inside of the housing 101 in direction of this edge.

The two surface areas 21, 22 of the joining portion 12 are connected to the battery cell housing 101 by welding or soldering or gluing or melting. This joining configuration is illustrated in cross sections in Fig. 3B and Fig. 3C. Thus, the at least one valve unit 10 is integrally incorporated into the battery cell housing 101 or the housing bag via the edge sealing 120.

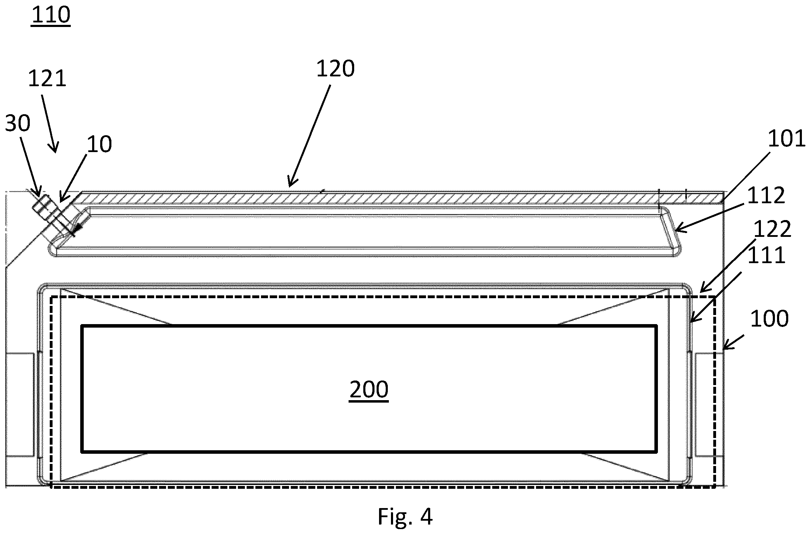

Fig. 4 shows a cross section of an exemplary manufacturing state battery cell 110 according to a further embodiment of the invention. In contrast to the manufacturing state battery cell 110 described in Fig. 3a, the manufacturing state battery cell 110 of the shown embodiment comprises a housing sealing 120 at the top edge of the housing bag 101 that is cropped or cut-off at one corner 121. In the cut-off corner 121 the housing sealing 120 is kept maintained. Thus, the buffer cavity 112 is sealed from all sides despite at the bottom side where the buffer cavity 112 may be connected to the cell component cavity 111 or the first cavity 111.

In this example the manufacturing state battery cell 110 comprises one valve unit 10 that is integrated into sealing area of the cut-off corner 121 of the housing sealing 120. The valve unit 10 is integrated orthogonally into the cut-off corner 121. Since the cut-off corner 121 is formed at an angle of 45° relative to the top edge housing sealing 120, the valve unit 10 is also tilted or inclined at an angle of 45°. This measure prevents the vertical exposure of the valve units 10 shown in Fig. 3A and reduces the overall height of the manufacturing state battery cell 110 since the inclined valve unit 10 with attached valve plug 30 does not extend above the top edge housing sealing 120. Similar to previously shown examples, the valve unit 10 is connected to the buffer cavity 112.

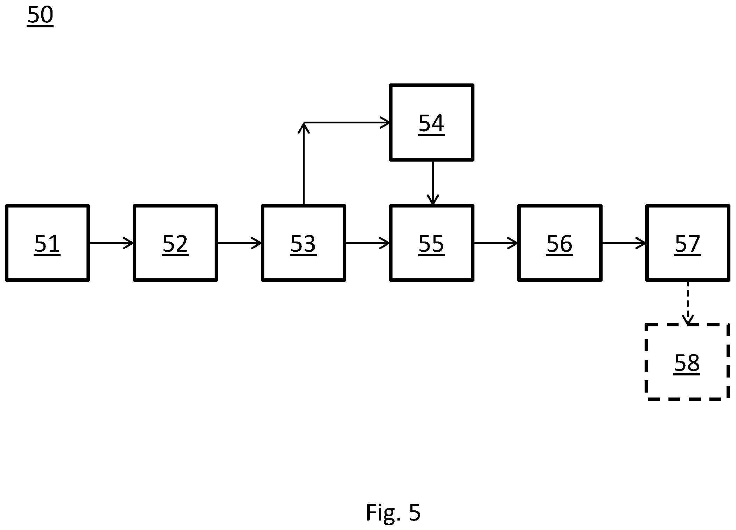

In Fig. 5 an exemplary diagram illustrating a method 50 for manufacturing a battery cell 100 in accordance with an embodiment of the invention is shown.

In a first step 51 a battery cell housing bag 101 is formed or provided which comprises one first cavity 111 and one second cavity 112, wherein the battery cell components 200 are positioned inside the first cavity 111 in the illustrated example of Fig. 3A. The first cavity 111 may also be defined as component cavity. The component cavity will later form the final cavity of the final battery cell 100 which is schematically indicated in Fig. 3A.

In a further step 52 the battery cell housing bag 101 is sealed, wherein at least one valve unit 10 is connected to a sealing 120 of the battery cell housing bag 101 and comprises a fluid channel 13 which protrudes into the second cavity 112. Additionally or alternatively, the fluid channel 13 may protrude into the first cavity 111 and/or into the second cavity 112. The second cavity 112 may also be defined as a buffer cavity for temporary storing electrolyte solution while the electrolyte solution is absorbed by the battery cell components 200 inside the first cavity 111.

In a further optional step 53, a vacuum is applied to the first cavity 111 and the second cavity 112 and an electrolyte solution is introduced into at least the second cavity 112 via the at least one valve unit 10.

Based on the battery cell components 200 and the absorption process it might be necessary to refill 54 the electrolyte solution in order to maintain the absorption process until the entire battery cell component 200 stack is fully soaked with electrolyte solution.

Then, after complete soaking 55 of the electrolyte by the battery cell components 200 a second sealing 122 (s. Fig. 3A) is formed 56 between the first cavity 111 and the second cavity 112 and the second cavity 112 is removed 57 from the first cavity 111 forming a battery cell 100. The second sealing 122 is cutting any fluid connection between the first cavity 111 and the second cavity 112.

Depending on the application with the second sealing 122 the fluid connection to the at least one valve unit 10 may also be closed. Thus, after removing the second cavity 112 also the valve unit 10 may be removed from the battery cell.

In a subsequent optional method step 58, the at least one valve unit may be recovered via partial heating or grinding in order to remove the parts of the sealing and/or battery cell housing bag 101 layers from the joining portion 12.

Prior to the recovery step 58 and/or prior to the separation 57 of the second cavity 112 along the second sealing 122 from the first cavity 111 the second cavity 112 may be emptied via vacuum or via gravity through the at least one valve unit 10.

## Claims

1. Valve unit (10), which is configured for electrolyte injection, comprising a fluid port (11) for connecting an electrolyte source and comprising a joining portion (12), wherein the joining portion (12) comprises at least two surfaces (21, 22) which are configured for connecting at least one layer of a battery cell housing (101), and comprising at least one fluid channel (13), wherein the at least one fluid channel (13) is protruding through the fluid port (11) and the joining portion (12), **characterized in that** the fluid channel (13) is repeatedly openable and closeable and the fluid port (11) comprises a locking portion (14) at its outer surface.

2. Valve unit according to claim 1, wherein the fluid port (13) comprises a rotation-symmetric shape around a flow direction (F) through the fluid channel (13), wherein the locking portion (14) is formed as a bulge or as a groove which is arranged at least partially at the outer surface of the fluid port (11).

3. Valve unit according to claim 1 or 2, wherein the fluid port (11), the fluid channel (13) and the joining portion (12) of the valve unit (10) are integrally formed as a one-piece component.

4. Valve unit according to anyone of the claims 1 to 3, wherein the at least two surfaces (21, 22) of the joining portion (12) comprise a curved shape.

5. Valve unit according to anyone of the claims 1 to 4, wherein the at least two surfaces (21, 22) of the joining portion (12) are formed smoothly or comprise cross ribs.

6. Valve unit according to anyone of the claims 1 to 5, wherein the joining portion (12) comprise two surfaces (21, 22) and the two surfaces (21, 22) comprise cross sections with a bell curve shape with asymptotically shaped tails (23) which are connected with each other at their ends.

7. Valve unit according to anyone of the claims 1 to 6, wherein the valve unit (10) comprises a valve cap or a valve plug (30) or a melting portion or a bending portion, wherein the fluid channel (13) is repeatedly openable and closeable via the valve cap or the valve plug (30) or the melting portion or the bending portion.

8. Valve unit according to anyone of the claims 1 to 7, wherein the valve cap or the valve plug (30) comprise at least one axially acting and/or radially acting sealing (31), wherein the at least one sealing (31) is formed integrally with the valve cap or the valve plug (30).

9. Valve unit according to anyone of the claims 1 to 8, wherein the valve cap or the valve plug (30) is configured to be attached at the fluid port (11) via plugging or screwing in order to prevent fluid leakage.

10. Valve unit according to claim 9, wherein the valve cap or the valve plug (30) is pluggable inside the fluid channel (13) of the fluid port (11) or is screwable into the fluid channel (13) of the fluid port (11) or is screwable onto an outer circumference of the fluid port (11) or is pluggable onto the outer circumference of the fluid port (11).

11. Valve unit according to anyone of the claims 1 to 10, wherein the valve cap or the valve plug (30) comprise at least one tool attachment (34), wherein the tool attachment (34) is arranged at at least one side or on top (33) of the valve cap or the valve plug (30).

12. A manufacturing state battery cell (110) comprising a housing bag (101) with at least one cavity (111, 112) which incorporates battery cell components (200), especially an anode, a cathode and a separator, and comprising at least one valve unit (10) according to anyone of the preceding claims, wherein at least one fluid channel (13) of the at least one valve unit (10) is forming a fluid connection with the at least one cavity (111, 112) through a housing sealing (120) and the at least one valve unit (10) is connected with the housing sealing (120) via the joining portion (12).

13. A manufacturing state battery cell according to claim 12, wherein the manufacturing state battery cell (110) comprises a cell component cavity (111) and at least one buffer cavity (112) for temporally incorporating an electrolyte solution during a manufacturing process (50) of a battery cell (100), wherein the at least one fluid channel (13) of the at least one valve unit (10) protrudes into the at least one buffer cavity (112).

14. A manufacturing state battery cell according to claim 12 or 13, wherein the at least two surface areas (21, 22) of the joining portion (12) are connectable to the battery cell housing (101) by welding or soldering or gluing or melting.

15. A manufacturing state battery cell according to anyone of the claims 12 to 14, wherein the at least two surface areas (21, 22) of the joining portion (12) of the at least one valve unit (10) are connected to a sealing area of a top edge housing sealing (120) and/or to a sealing area of a cut-off corner (121) of the housing sealing (120), wherein the at least one valve unit (10) extends vertically from the top edge housing sealing (120).

16. A manufacturing state battery cell according to claim 15, wherein the valve unit (10) extends in an inclined manner from the sealing area of a cut-off corner (121), wherein the inclined valve unit (10) remains below or equal to a height of the top edge housing sealing (120)

17. A method (50) to manufacture a battery cell (100), wherein a battery cell housing bag (101) comprising one first cavity (111) and one second cavity (112) is formed or provided, wherein battery cell components (200) are positioned inside the first cavity (111), wherein the battery cell housing bag (101) is sealed, wherein at least one valve unit (10) is connected to at least one sealing (120) of the battery cell housing bag (101) and comprises a fluid channel (13) which protrudes into at least the second cavity (112), wherein a vacuum is applied to the first and second cavity (111, 112) and an electrolyte is introduced into the second cavity (112) via the at least one valve unit (10) at least once, wherein the electrolyte is at least partially soaked by the battery cell components (200), and wherein after complete soaking of the electrolyte by the battery cell components (200) a second sealing (122) is performed between the first and the second cavity (111, 112) and the second cavity (112) is removed from the first cavity (111) forming a battery cell (100).

18. Method according to claim 17, wherein the electrolyte is filled at least twice through the valve unit (10) into the second cavity (112), wherein the valve cap or the valve plug (30) is removed for filling of the electrolyte and wherein the valve cap or the valve plug (30) is attached to the fluid port (11) after filling of the electrolyte.

19. Method according to claim 17 or 18, wherein after complete soaking of the electrolyte by the battery cell components (200) any remaining electrolyte in the second cavity (112) is removed via the at least one valve unit (10) after performing the second sealing (122).
